(19) Europäisches Patentamt
European Patent Office
Office européen des brevets

(11) **EP 2 031 420 B1**

(12) **EUROPEAN PATENT SPECIFICATION**

(45) Date of publication and mention
of the grant of the patent:
**07.05.2014 Bulletin 2014/19**

(51) Int Cl.:
***G01V 3/00*** *(2006.01)*

(21) Application number: **08021131.1**

(22) Date of filing: **05.04.2007**

(54) **Correction of cross-component induction measurements for misalignment using comparison of the XY formation response**

Korrektur von komponentenübergreifenden Induktionsmessungen für Fehlausrichtung mittels Vergleich der XY-Formationsreaktion

Correction des mesures d'induction de composant croisé pour désalignement en utilisant la comparaison de la réponse de formation XY

(84) Designated Contracting States:
**FR GB**

(30) Priority: **06.04.2006 US 400536**
**06.04.2006 US 398838**
**06.04.2006 US 400097**

(43) Date of publication of application:
**04.03.2009 Bulletin 2009/10**

(62) Document number(s) of the earlier application(s) in accordance with Art. 76 EPC:
**07755037.4 / 2 002 288**

(73) Proprietor: **Baker Hughes Incorporated**
**Houston, TX 77019 (US)**

(72) Inventors:
• **Rabinovich, Michael B.**
**Houston, TX 77094 (US)**
• **Tabarovsky, Leonty A.**
**Cypress, TX 77429 (US)**
• **Corley, Bill H.**
**Conroe, TX 77304 (US)**
• **Pelegri, Luis M.**
**Humble, TX 77346 (US)**

(74) Representative: **Jeffrey, Philip Michael**
**Dehns**
**St Bride's House**
**10 Salisbury Square**
**London**
**EC4Y 8JD (GB)**

(56) References cited:
WO-A1-88/09515          US-A- 3 187 252
US-A- 5 307 072          US-A- 5 585 790
US-A1- 2006 125 479

**Description**

**BACKGROUND OF THE INVENTION**

**1. Field of the Invention**

The present invention is related to the field of apparatus design in the field of oil exploration. In particular, the present invention describes a method for calibrating multicomponent logging devices used for detecting the presence of oil in boreholes penetrating a geological formation.

**2. Description of the Related Art**

Electromagnetic induction resistivity well logging instruments are well known in the art. Electromagnetic induction resistivity well logging instruments are used to determine the electrical conductivity, and its converse, resistivity, of earth formations penetrated by a borehole. Formation conductivity has been determined based on results of measuring the magnetic field of eddy currents that the instrument induces in the formation adjoining the borehole. The electrical conductivity is used for, among other reasons, inferring the fluid content of the earth formations. Typically, lower conductivity (higher resistivity) is associated with hydrocarbon-bearing earth formations. The physical principles of electromagnetic induction well logging are well described, for example, in, J. H. Moran and K. S. Kunz, Basic Theory of Induction Logging and Application to Study of Two-Coil Sondes, Geophysics, vol. 27, No. 6, part 1, pp. 829-858, Society of Exploration Geophysicists, December 1962. Many improvements and modifications to electromagnetic induction resistivity instruments described in the Moran and Kunz reference, supra, have been devised, some of which are described, for example, in US 4837517 to Barber, in US 5157605 to Chandler et al., and in US 5600246 to Fanini et al.

The conventional geophysical induction resistivity well logging tool is a probe suitable for lowering into the borehole and it comprises a sensor section containing a transmitter antenna and a receiver antenna and other, primarily electrical, equipment for measuring data to infer the physical parameters that characterize the formation. The sensor section, or mandrel, comprises induction transmitters and receivers positioned along the instrument axis, arranged in the order according to particular instrument or tool specifications and oriented parallel with the borehole axis. The electrical equipment generates an electrical voltage to be further applied to a transmitter induction coil, conditions signals coming from receiver induction coils, processes the acquired information, stores the data or, by means of telemetry sends the data to the earth surface through a wire line cable used to lower the tool into the borehole.

In general, when using a conventional induction logging tool with transmitters and receivers (induction coils) oriented only along the borehole axis, the hydrocarbon-bearing zones are difficult to detect when they occur in multi-layered or laminated reservoirs. These reservoirs usually consist of thin alternating layers of shale and sand and, oftentimes, the layers are so thin that due to the insufficient resolution of the conventional logging tool they cannot be detected individually. In this case the average conductivity of the formation is evaluated.

Conventional induction well logging techniques employ coils wound on an insulating mandrel. One or more transmitter coils are energized by an alternating current. The oscillating magnetic field produced by this arrangement results in the induction of currents in the formations that are nearly proportional to the conductivity of the formations. These currents, in turn, contribute to the voltage induced in one or more receiver coils. By selecting only the voltage component that is in phase with the transmitter current, a signal is obtained that is approximately proportional to the formation conductivity. In conventional induction logging apparatus, the basic transmitter coil and receiver coil have axes that are aligned with the longitudinal axis of the well logging device. (For simplicity of explanation, it will be assumed that the bore hole axis is aligned with the axis of the logging device, and that these are both in the vertical direction. Also single coils will subsequently be referred to without regard for focusing coils or the like.) This arrangement tends to induce secondary current loops in the formations that are concentric with the vertically oriented transmitting and receiving coils. The resultant conductivity measurements are indicative of the horizontal conductivity (or resistivity) of the surrounding formations. There are, however, various formations encountered in well logging which have a conductivity that is anisotropic. Anisotropy results from the manner in which formation beds were deposited by nature. For example, "uniaxial anisotropy" is characterized by a difference between the horizontal conductivity, in a plane parallel to the bedding plane, and the vertical conductivity, in a direction perpendicular to the bedding plane. When there is no bedding dip, horizontal resistivity can be considered to be in the plane perpendicular to the bore hole, and the vertical resistivity in the direction parallel to the bore hole. Conventional induction logging devices, which tend to be sensitive only to the horizontal conductivity of the formations, do not provide a measure of vertical conductivity or of anisotropy. Techniques have been developed to determine formation anisotropy. See, *e.g.* US 4302722 to Gianzero et al.. Transverse anisotropy often occurs such that variations in resistivity occur in the azimuthal direction.

Thus, in a vertical borehole, a conventional induction logging tool with transmitters and receivers (induction coils) oriented only along the borehole axis responds to the average horizontal conductivity that combines the conductivity of both sand and shale. These average readings are usually dominated by the relatively higher conductivity of the shale layers and exhibit reduced sensitivity to the lower conductivity sand layers where hydrocarbon reserves are produced. To address this problem, loggers have turned to using transverse induction logging tools having magnetic transmitters and receivers (induction coils) oriented transversely with respect to the tool longitudinal axis. Such instruments for transverse induction well logging have been described in PCT Patent publication WO 98/00733 of Beard et al. and US 5452761 to Beard et al.; US 5999883 to Gupta et al.; and US 5781436 to Forgang et al.

One, if not the main, difficulty in interpreting the data acquired by a transversal induction logging tool is associated with vulnerability of its response to borehole conditions. Among these conditions is the presence of a conductive well fluid as well as wellbore fluid invasion effects.

In induction logging instruments, the acquired data quality depends on the formation electromagnetic parameter distribution (conductivity) in which the tool induction receivers operate. Thus, in the ideal case, the logging tool measures magnetic signals induced by eddy currents flowing in the formation. Variations in the magnitude and phase of the eddy currents occurring in response to variations in the formation conductivity are reflected as respective variations in the output voltage of receivers. In the conventional induction instruments, these receiver induction coil voltages are conditioned and then processed using analog phase sensitive detectors or digitized by digital-to-analog converters and then processed with signal processing algorithms. The processing allows for determining both receiver voltage amplitude and phase with respect to the induction transmitter current or magnetic field waveform. It has been found convenient for further uphole geophysical interpretation to deliver the processed receiver signal as a vector combination of two voltage components: one being in-phase with transmitter waveform and another out-of-phase, quadrature component. Theoretically, the in-phase coil voltage component amplitude is the more sensitive and noise-free indicator of the formation conductivity.

Recognizing the fact that no hardware calibration is perfect, and may further be susceptible to changes over time, the present invention provides methods for calibration of multi-component induction logging instruments in the presence of possible hardware errors and misalignments.

## SUMMARY OF THE INVENTION

In an aspect of the present invention, there is provided a method as claimed in claim 1. One embodiment of the invention is a method of estimating a parameter of interest of an earth formation. A logging tool is conveyed into a borehole in the earth formation. Excitation of a transmitter antenna on the logging tool is done at a plurality of rotational angles in a substantially homogenous interval. A first signal responsive to the excitation is received at each of the rotational angles with a first receiver antenna having an axial direction different form that of the transmitter antenna. A second signal responsive to the excitation is received at each of the rotational angles with a second receiver antenna substantially parallel to the transmitter antenna and orthogonal to the first receiver antenna. A misalignment angle between the transmitter antenna and the first receiver antenna is estimated using the first and second signals at each of the rotational angles.

In a preferred embodiment, the step of receiving the first signal at the plurality of rotation angles further comprises making measurements at a plurality of depths.

In a preferred embodiment, the step of receiving the first signal at the plurality of rotation angles further comprises rotating the logging tool at substantially the same depth.

In a preferred embodiment, the transmitter antenna and the first receiver antenna are substantially orthogonal to each other. Preferably, the transmitter antenna is substantially orthogonal to a longitudinal axis of the tool.

In a preferred embodiment, the first signal and the second signal comprise in-phase signals.

In a preferred embedment, the step of estimating the misalignment angle further comprises averaging the first signals and the second signals over the plurality of rotational angles.

In a preferred embodiment, the parameter of interest is at least one of (i) a horizontal conductivity, (ii) a vertical conductivity, (iii) a horizontal resistivity, (iv) a vertical resistivity, (v) a relative dip angle, (vi) a strike angle, (vii) a sand fraction, (viii) a shale fraction, and (ix) a water saturation.

In another aspect of the present invention, there is provided an apparatus for determining a parameter of interest of an earth formation as claimed in claim 7. The apparatus includes a logging tool conveyed into a borehole. A transmitter antenna (having a first axial direction) on the logging tool is activated at a plurality of rotational angles. A first receiver antenna with a direction different from that of the transmitter antenna receives a first signal at each of the rotational angles. A second receiver antenna that is substantially parallel to the transmitter antenna and orthogonal to the second receiver antenna receives a second signal at each of the rotational angles. A processor estimates from the first and second signals at the plurality of rotational angles a misalignment angle between the transmitter and the first receiver antenna.

In a preferred embodiment, the transmitter antenna and the first receiver antenna are substantially orthogonal to each other. Preferably, the first axial direction is substantially orthogonal to a longitudinal axis of the tool.

In a preferred embodiment, the first and second signals comprise in phase signals.

In a preferred embodiment, the processor is configured to estimate the misalignment angle at least in part by averaging the first signals and the second signals over the plurality of rotational angles.

In a preferred embodiment, the processor is further configured to: (i) correct the first signal at at least one of the plurality of rotational angles; and (ii) use the corrected first signal to estimate a parameter of interest of the earth formation.

In a preferred embodiment, the parameter of interest is at least one of (i) a horizontal conductivity, (ii) a vertical conductivity, (iii) a horizontal resistivity, (iv) a vertical resistivity, (v) a relative dip angle, (vi) a strike angle, (vii) a sand fraction, (viii) a shale fraction, and (ix) a water saturation.

In a preferred embodiment, the apparatus further comprises a wireline which is configured to convey the logging tool into the borehole.

In a preferred embodiment, the apparatus further comprises a motor configured to rotate the logging tool to the plurality of rotational angles.

In a preferred embodiment, the logging tool is part of a bottomhole assembly (BHA) configured to be conveyed into the borehole on a drilling tubular.

In a preferred embodiment, the apparatus further comprises an orientation device configured to sense the rotational angle of the tool.

In another aspect of the present invention, there is provided a computer readable medium for use with an apparatus for evaluating an earth formation as claimed in claim 16. The apparatus includes a logging tool conveyed into a borehole in the earth formation. A transmitter antenna on the logging tool is activated at a plurality of rotational angles. A first receiver antenna with a direction different from that of the transmitter antenna receives a first signal at each of the rotational angles. A second receiver antenna that is substantially parallel to the transmitter antenna and orthogonal to the first receiver antenna receives a second signal at each of the rotational angles. The medium includes instructions that enable a processor to estimate from the first and second signals at the plurality of rotational angles a misalignment angle between the transmitter and the first receiver antenna.

In a preferred embodiment, the medium comprises at least one of (i) a ROM, (ii) an EPROM, (iii) an EAROMs, (iv) a flash memory, and (v) an optical disk.

In an embodiment of the method the transmitter antenna on the logging tool is excited at a plurality of frequencies. A signal resulting from the excitation is received at each of the frequencies using the receiver antenna having a different axial direction than the transmitter antenna. A misalignment angle between the transmitter antenna and the receiver antenna is estimated from the signals at the plurality of frequencies.

In an embodiment, the first axial direction and the second axial direction are substantially orthogonal to each other. The signal (responsive to the excitation) preferably comprises a quadrature signal.

In an embodiment, estimating the misalignment angle further comprises representing the signal at each of the plurality of frequencies by a Taylor series expansion. Preferably, determining the misalignment angle further comprises using a constant term of the Taylor series expansion.

In an embodiment, an in-phase signal is received with the receiver antenna at at least one of the plurality of frequencies, and the in-phase signal is corrected using the estimated misalignment angle. Preferably, the corrected in-phase signal is used to estimate the parameter of interest of the earth formation. The parameter of interest is preferably at least one of (i) a horizontal conductivity, (ii) a vertical conductivity, (iii) a horizontal resistivity, (iv) a vertical resistivity, (v) a relative dip angle, (vi) a strike angle, (vii) a sand fraction, (viii) a shale fraction, and (ix) a water saturation.

In an embodiment of the apparatus the transmitter antenna on the logging tool is operated at a plurality of frequencies. The receiver antenna having an axial direction different from that of the transmitter antenna receives a signal resulting from the operation of the transmitter antenna at each of the frequencies. The processor estimates from the signals at the plurality of frequencies a misalignment angle between the transmitter antenna and the receiver antenna.

In an embodiment, the transmitter antenna and the receiver antenna are substantially orthogonal to each other. The signal (responsive to the excitation) preferably comprises a quadrature signal.

In an embodiment, the processor is configured to estimate the misalignment angle by further representing the signal at each of the plurality of frequencies by a Taylor series expansion. Preferably, the processor is configured to estimate the misalignment angle by using a constant term of the Taylor series expansion.

In an embodiment, the receiver antenna is further configured to receive an in-phase signal and wherein the processor is further configured to correct the in-phase signal using the estimated misalignment angle. Preferably, the processor further is further configured to use the corrected in-phase signal to estimate the parameter of interest of the earth formation. The parameter of interest is preferably at least one of (i) a horizontal conductivity, (ii) a vertical conductivity, (iii) a horizontal resistivity, (iv) a vertical resistivity, (v) a relative dip angle, (vi) a strike angle, (vii) a sand fraction, (viii) a shale fraction, and (ix) a water saturation.

In a preferred embodiment, the logging tool is part of a downhole assembly, the apparatus further comprising a conveyance device selected from (i) a wireline, and (ii) a drilling tubular.

In a preferred embodiment, the transmitter antenna and the receiver antenna are spaced apart.

In an embodiment of the computer readable medium the transmitter antenna on the logging tool is operated at a plurality of frequencies. The receiver antenna on the logging tool that has an axial direction different from the transmitter antenna receives a signal resulting from the operation of the transmitter antenna at each of the frequencies. The medium includes instructions that enable the processor to determine from the signals at the plurality of frequencies a misalignment angle between the transmitter antenna and the receiver antenna.

In an embodiment, the receiver makes an additional measurement, and the medium further comprises instructions which enable the processor to use the misalignment angle and the additional measurement to estimate a parameter of the earth formation.

In a preferred embodiment, the medium comprises at least one of (i) a ROM, (ii) an EPROM, (iii) an EAROMs, (iv) a flash memory, and (v) an optical disk.

In an embodiment of the method, multi-component measurements resistivity measurements are obtained using the logging tool. The multi-component measurements are inverted without using a particular cross-component to give a resistivity model. The resistivity model is used to provide a simulated value of the particular cross-component. The simulated value and the actual value of the particular cross-component are used for estimating a misalignment angle in the logging tool.

In an embodiment, the step of inverting the multi-component measurements further comprises using a search technique.

In an embodiment, the method further comprises obtaining multi-array induction measurements and using the multi-array induction measurements in the inversion.

In an embodiment, the step of inverting the multi-component measurements further comprises: (i) using a first subset of the measurements to estimate a horizontal resistivity of the formation, and (ii) using the estimated horizontal resistivity and another subset of the measurements to estimate a vertical resistivity of the earth formation.

In an embodiment, the step of inverting the multi-component measurements further comprises using a separation of modes.

In an embodiment, the particular cross-component is selected from (i) an XY component, and (ii) an XZ component.

In an embodiment, the step of determining the misalignment angle further comprises using an average value of the particular cross-component and an average simulated value of the particular cross-component.

In an embodiment, the method further comprises using the misalignment angle and the multi-component measurements to estimate the parameter of interest of the earth formation. The parameter of interest is preferably at least one of (i) a horizontal conductivity, (ii) a vertical conductivity, (iii) a horizontal resistivity, (iv) a vertical resistivity, (v) a relative dip angle, (vi) a strike angle, (vii) a sand fraction, (viii) a shale fraction, and (ix) a water saturation.

In an embodiment of the apparatus, the logging tool obtains a plurality of multi-component resistivity measurements. The processor inverts the multi-component measurements while excluding a particular cross-component to give a resistivity model. The processor then uses the resistivity model to provide a simulated value of the particular cross-component. The processor than uses the simulated value and the actual value of the particular cross-component to estimate a misalignment angle in the logging tool.

In an embodiment, the processor is configured to invert the multi-component measurements using a search technique.

In an embodiment, the processor is configured to invert the multi-component measurements using: (i) a first subset of the measurements to estimate a horizontal resistivity of the formation, and (ii) the estimated horizontal resistivity and another subset of the measurements to estimate a vertical resistivity of the earth formation.

In an embodiment, the processor is further configured to invert the multi-component measurements by using a separation of modes.

In an embodiment, the particular cross-component is selected from (i) an XY component, and (ii) an XZ component.

In an embodiment, the processor is further configured to estimate the misalignment angle using an average value of the particular cross-component and an average simulated value of the particular cross-component.

In an embodiment, the processor is further configured to use the estimated misalignment angle and the multi-component measurements to estimate the parameter of interest of the earth formation. The parameter of interest is preferably at least one of (i) a horizontal conductivity, (ii) a vertical conductivity, (iii) a horizontal resistivity, (iv) a vertical resistivity, (v) a relative dip angle, (vi) a strike angle, (vii) a sand fraction, (viii) a shale fraction, and (ix) a water saturation.

In a preferred embodiment, the apparatus further comprises a wireline configured to convey the logging tool into the borehole.

In an embodiment, the apparatus further comprises a motor configured to rotate the logging tool to the plurality of rotational angles.

In a preferred embodiment, the logging tool is part of a bottomhole assembly (BHA) conveyed into the borehole on a drilling tubular.

In an embodiment of the computer readable medium, the logging tool obtains a plurality of multi-component resistivity measurements. The instructions enable the processor to invert the multi- component measurements while excluding a particular cross-component to give a resistivity model. The instructions further enable the processor to use the resistivity model to provide a simulated value of the particular cross-component. The instructions then enable the processor to use the simulated value and the actual value of the particular cross-component to estimate a misalignment angle in the logging tool.

In a preferred embodiment, the medium further comprises at least one of (i) a ROM, (ii) an EPROM, (iii) an EAROMs, (iv) a flash memory, and (v) an optical disk.

## BRIEF DESCRIPTION OF THE DRAWINGS

The present invention is best understood with reference to the accompanying figures in which like numerals refer to like elements and in which:

FIG. 1 shows schematically a wellbore extending into a laminated earth formation, into which wellbore an induction logging tool as used according to the invention has been lowered;
FIG. 2A (prior art) illustrates a conventional resistivity measurement in the vertical direction;
FIG. 2B (prior art) illustrates a resistivity measurement in the horizontal direction;
FIG. 3 shows a borehole inclined to a bedding plane;
FIG. 4 shows a flow chart of one embodiment of the present invention using quadrature signals;
FIG. 5 shows a flow chart of another embodiment of the present invention using average signals; and
FIG. 6 shows a flow chart of an embodiment of the present invention using inversion.

## DETAILED DESCRIPTION OF THE INVENTION

The instrument structure provided by the present invention enables increased stability and accuracy in an induction wellbore logging tool and its operational capabilities, which, in turn, results in better quality and utility of wellbore data acquired during logging. The features of the present invention are applicable to improve the accuracy of a transverse induction tool.

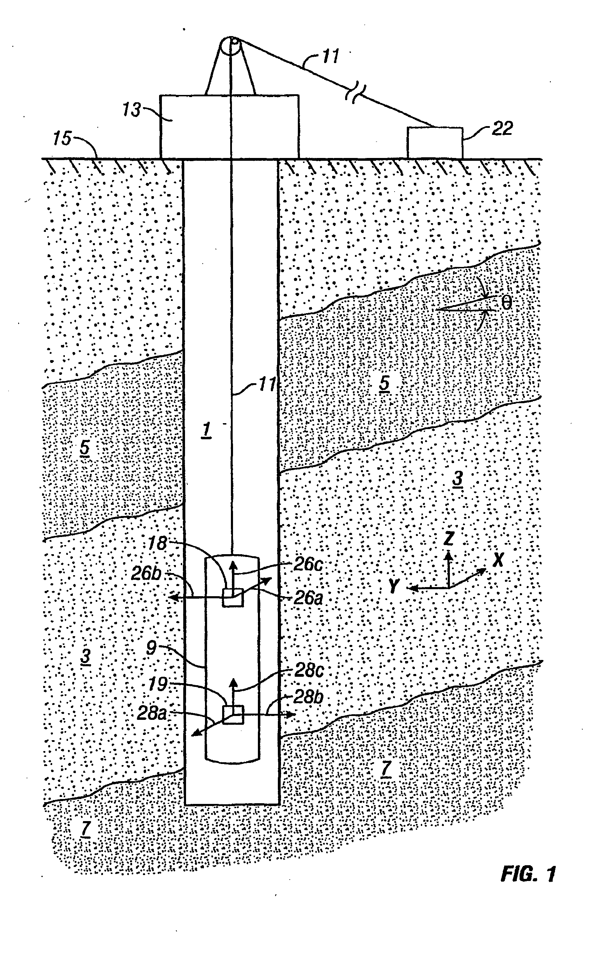

The invention will now be described in more detail, and by way of example, with reference to the accompanying drawings. **FIG. 1** schematically shows a wellbore **1** extending into a laminated earth formation, into which wellbore an induction logging tool **9** as used according to the present invention has been lowered. The wellbore in **FIG. 1** extends into an earth formation that includes a hydrocarbon-bearing sand layer **3** located between an upper shale layer **5** and a lower shale layer 7, both having higher conductivity than the hydrocarbon bearing sand layer **3**. An induction logging tool **9** used in the practice of the invention has been lowered into the wellbore **1** via a wireline **11** extending through a blowout preventor **13** (shown schematically) located at the earth surface **15**. The surface equipment **22** includes an electric power supply to provide electric power to the set of coils **18** and a signal processor to receive and process electric signals from the receiver coils **19**. Alternatively, the power supply and/or signal processors are located in the logging tool. It is to be noted that the term "coil" is intended to include antennas made of non-circular conductors as well as conductor arrangements (including rectangular configurations) limited to a plane that are commonly used to transmit and receive electromagnetic energy.

The relative orientation of the wellbore **1** and the logging tool **9** with respect to the layers **3, 5, 7** is determined by two angles, one of which $\theta$ as shown in the **FIG. 1.** For determination of these angles see, for example, US 5999883 to Gupta, et al. The logging tool **9** is provided with a set of transmitter coils **18** and a set of receiver coils **19**, each set of coils **18, 19** being connected to surface equipment **22** via suitable conductors (not shown) extending along the wireline **11**.

Each set of coils **18** and **19** includes three coils (not shown), which are arranged such that the set has three magnetic dipole moments in mutually orthogonal directions, that is, in x, y and z directions. The three-coil transmitter coil set transmits $T_x$, $T_y$ and $T_z$. The receiver coil receives $R_x$, $R_y$ and $R_z$ plus the cross-components, $R_{xy}$, $R_{xz}$ and $R_{zy}$. Thus, coil set **18** has magnetic dipole moments **26a, 26b, 26c,** and coil set **19** has magnetic dipole moments **28a, 28b, 28c**. In one embodiment, the transmitter coil set **18** is electrically isolated from the receiver coil set **19** The apparatus and method using a wireline is not intended to be a limitation of the invention, it being possible to practice the invention with a logging tool on a bottomhole assembly (BHA) conveyed on a drilling tubular. For the purposes of the present invention, the BHA and the assembly described in **Fig. 1** may be referred to as a downhole assembly.

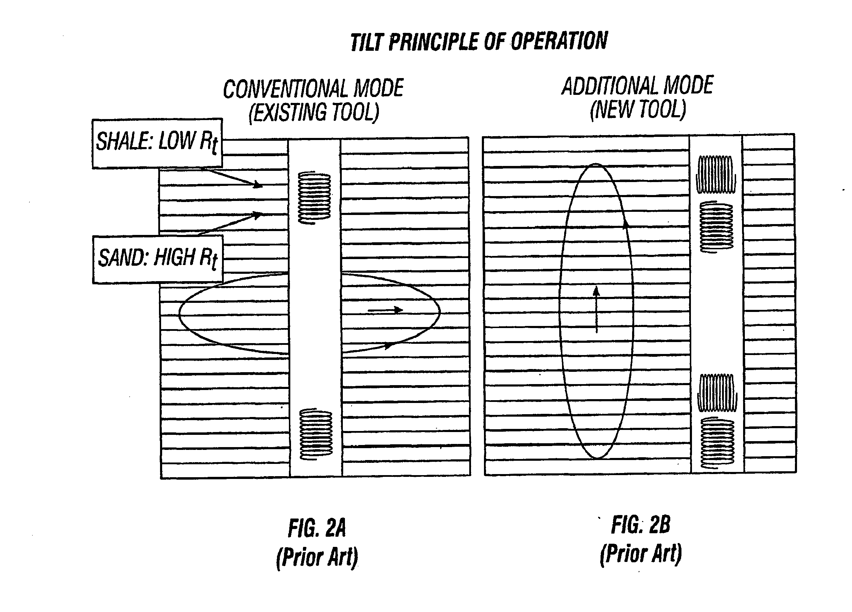

As shown in **FIG. 2A**, conventional induction logging tools provide a single transmitter coil and a receiver coil that measure resistivity in the horizontal direction. In the conventional horizontal mode, as shown in **FIG. 2A**, the resistivities of adjacent high resistivity sand and low resistivity shale layers appear in parallel, thus the resistivity measurement is dominated by low resistivity shale. As shown in **FIGS. 1** and **2B**, in the present invention a transverse coil is added to measure resistivity in the vertical direction. In the vertical direction, the resistivity of the highly resistive sand and low resistivity shale are appear in series and thus the vertical series resistivity measurement is dominated by the resistivity of the highly resistive sand.

For ease of reference, normal operation of the tool **9**, as shown in **FIGS. 1** and **2B**, will be described hereinafter only for the coils having dipole moments in the x-direction, i.e. dipole moments **26a** and **28a**. During normal operation an alternating current of a frequency $f_1$ is supplied by the electric power supply of surface equipment **22** to transmitter coil set **18** so that a magnetic field with magnetic dipole moment **26a** is induced in the formation. In an alternative embodiment, the frequency is swept through a range $f_1$ through $f_2$. This magnetic field extends into the sand layer **3** and induces a number of local eddy currents in the sand layer **3**. The magnitude of the local eddy currents is dependent upon their location relative to the transmitter coil set **18**, the conductivity of the earth formation at each location, and the frequency at which the transmitter coil set **18** is operating. In principle, the local eddy currents act as a source inducing new currents, which again induce further new currents, and so on. The currents induced into the sand layer **3** induce a response magnetic field in the formation, which response magnetic field is not in phase with the transmitted magnetic field, but which induces a response current in receiver coil set **19**. The magnitude of the current induced in the sand layer **3** depends on the conductivity of the sand layer **3** and affects the magnitude of the response current in receiver coil set **19**. The magnitude of the response current in receiver coil **19** also depends on the conductivity of sand layer **3** and thereby provides an indication of the conductivity of the sand layer **3**. However, the magnetic field generated by transmitter coil set **18** not only extends into sand layer **3**, but also into the wellbore fluid and into the shale layers **5** and **7** so that currents in the wellbore fluid and the shale layers **5** and **7** are induced.

Let us consider $H_{XY}$ measurement, where X is orientation of the transmitter and Y is the orientation of the receiver. This notation where the first subscript refers to the transmitter orientation and the second to the receiver orientation will be used throughout the present disclosure. We assume that if the coils are properly aligned (exactly 90° between X and Y coils) the response from the formation will be $H_{XYtrue}$. If the Y receiver is misaligned with the X transmitter by the angle $\alpha$, then the magnetic field $H_{XY}$ measured in such array is

$$H_{XY} = H_{XYtrue} \cdot \cos\alpha + H_{XXtrue} \cdot \sin\alpha \qquad (1).$$

The angle $\alpha$ is considered to be positive if the angle between the X and Y coils is less than 90°. Those skilled in the art having the benefit of the present disclosure would recognize that the misalignment angle could change over time for wireline measurements and MWD applications.

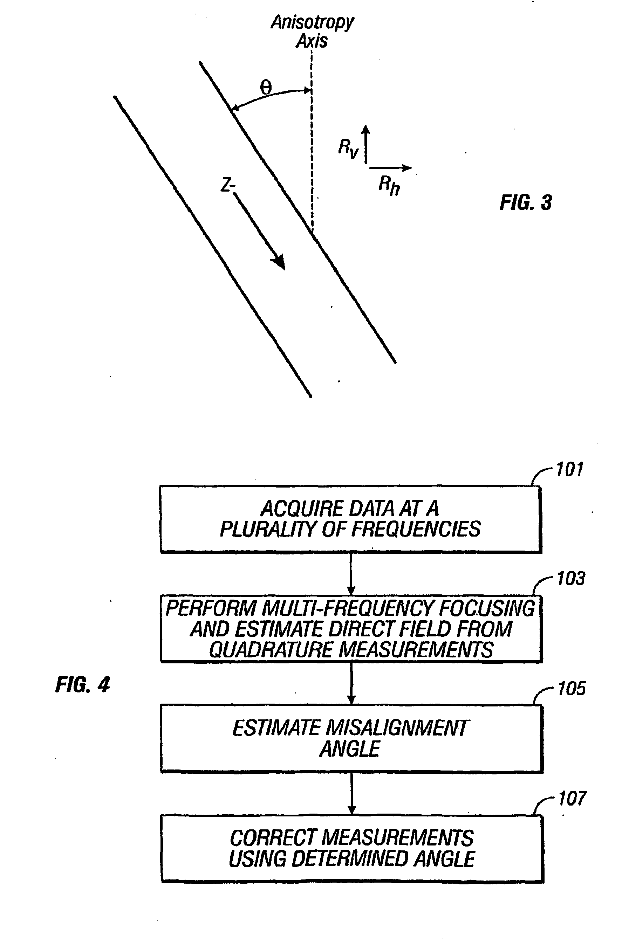

A simple example shows that even when the misalignment angle $\alpha$ is small (typically 1-5°) there are quite a few cases where the misalignment error becomes comparable with the true Hxy response. In the example, $R_h$, the horizontal resistivity in a direction normal to the anisotropy axis is taken as 0.5 Ω-.m; $R_v$, the vertical resistivity (in a direction parallel to the anisotropy axis) is taken as 2 Ω-.m; the relative dip angle θ (see **Fig. 3**) between the tool axis and the anisotropy axis is 20°. For a relative toolface rotation of 45° and a frequency of 83.3 kHz, the true response (real voltage converted to apparent conductivities) for the XX component is -524.3 mS/m and for the XY component is 25.4 mS/m.

For a misalignment angle of 3°, the measured XY signal will be $\sigma_{XYmeasured}$ = 25.4$mS/m$·cos3°-524.3$mS/$·sin3°=-2.1 mS/m

We can see that in this case the misalignment error exceeds 100%, having changed by an amount of about 27.5 mS/m. If the misalignment angle $\alpha$ is known, **Eqn.1** can be used for correcting the measured XY signal. Unfortunately, the misalignment angle $\alpha$ cannot be measured in advance because it can change during pre-logging tool string assembly and also while logging due to twisting and bending effects.

In one embodiment of the invention, the misalignment angle $\alpha$ is estimated and the measurements are corrected using a multi-frequency quadrature signal. The 3DEX tool has a 3-coil configurations (two transmitter and one receiver coils) for cross-components that are not mutually balanced. The main reason for mutually balanced multi-coil arrays in induction measurements (including main components of the 3DEX tool) is compensation of the direct field in quadrature components. This direct field is large compared to the formation response, so if it is not compensated and the phase detection is not accurate enough, it will propagate in the real voltage and cause undesired distortion. For cross-components measurements, the mutual balancing is not as important because the direct field of the X transmitter does not contribute into the Y receiver due to orthogonality. But if the X and Y coils are misaligned, the direct field from unbalanced X transmitters does contribute to the Y quadrature signal. The misalignment angle $\alpha$ is estimated based on the amplitude of this signal.

**Eqn. (1)** is used to analyze the misaligned XY quadrature signal. The response consists of the cosine projection of true XY formation quadrature signal and the sine projection of true XX signal. The true XX signal is dominated by the direct field, which is frequency and formation independent. If we extract the constant part of the XY quadrature signal and compare it with the total direct field, we will be able to find the misalignment angle. For example, let us consider the 3DEX response in the following model:

$R_h$=1 Ω-m;
$R_v$=4 Ω-m;
Relative dip = 45°;
Relative rotation = 45°;
Frequency=20.83 kHz.

The values of the XY quadrature formation response and the direct field for a 2° misalignment for this model are presented in Table 1. It can be seen that in this case the formation response is comparable with the direct field, meaning that we have to separate the direct field from the formation response to accurately estimate the misalignment angle.

**Table 1. Comparison of the XY formation response and the direct field caused by 2° misalignment**

| XY formation response Re(Hxy) (Wb/ m$^2$) | Direct field for 2° misalignment (Wb/ m$^2$) | Formation relative contribution % |
|---|---|---|
| 0.0474*10$^{-3}$ | -0.0903*10$^{-3}$ | 52.5 |

The separation of the direct field from the formation response in the quadrature signal may be achieved by applying the Taylor expansion used in multi-frequency focusing of the real signal. Using results from US5884227 to Rabinovich et al., the quadrature signal is given by the Taylor series expansion:

$$\mathrm{Re}(H) = b_o + b_1\omega^{3/2} + b_2\omega^2 + b_3\omega^{5/2} + b_4\omega^{7/2} + b_5\omega^4 + b_6\omega^{9/2} \ldots\ldots \qquad (2)$$

The first term in this expansion is independent of frequency and represents the direct field. In the present invention, multi-frequency quadrature measurements are made and this first term is extracted using the Taylor series expansion. Typically, this is done using a multi-frequency focusing algorithm with the appropriate power series. To test our invention, we generated synthetic data for two different models:

1. $R_h$=10 Ω-m; $R_v$=40 Ω-m, Relative dip=45°, Relative rotation=45°;
2. $R_h$=1 Ω-m; $R_v$=4 Ω-m, Relative dip=45°, Relative rotation=45°.

For each model we calculated responses for 5 different misalignment angles: 0, 1, 2, 3, 4, 5 degrees. The term "misalignment angle" when used with respect to coils that are nominally orthogonal to each other means a difference from 90° in alignment. For each misalignment angle we applied the above-described procedure to extract the direct field from the data, and based on this value, calculated the misalignment angle. The results for the both models are presented in the tables below.

**Table 2. Calculation of the misalignment angle for the Model 1.**

| True misalignment angle (deg) | Extracted direct field (Wb/m$^2$) | Total direct field (Wb/m$^2$) | Calculated misalignment angle (deg) |
|---|---|---|---|
| 5 | -0.225*10$^{-3}$ | -0.2586*10$^{-2}$ | 4.99 |
| 4 | -0.180*10$^{-3}$ | -0.2586*10$^{-2}$ | 3.99 |
| 3 | -0.135*10$^{-3}$ | -0.2586*10$^{-2}$ | 2.99 |
| 2 | -0.902*10$^{-4}$ | -0.2586*10$^{-2}$ | 1.999 |
| 1 | -0.451*10$^{-4}$ | -0.2586*10$^{-2}$ | 0.999 |
| 0 | -0.450*10$^{-6}$ | -0.2586*10$^{-2}$ | 0.01 |

**Table 3. Calculation of the misalignment angle for the Model 2.**

| True misalignment angle (deg) | Extracted direct field (Wb/m$^2$) | Total direct field (Wb/m$^2$) | Calculated misalignment angle (deg) |
|---|---|---|---|
| 5 | $-0.224*10^{-3}$ | $-0.2586*10^{-2}$ | 4.97 |
| 4 | $-0.179*10^{-3}$ | $-0.2586*10^{-2}$ | 3.97 |
| 3 | $-0.134*10^{-3}$ | $-0.2586*10^{-2}$ | 2.97 |
| 2 | $-0.885*10^{-4}$ | $-0.2586*10^{-2}$ | 1.96 |
| 1 | $-0.433*10^{-4}$ | $-0.2586*10^{-2}$ | 0.96 |
| 0 | $-0.188*10^{-5}$ | $-0.2586*10^{-2}$ | 0.04 |

This embodiment of the invention may be represented by the flow chart of **Fig. 4.** Data are acquired at a plurality of frequencies **101**. As a specific example, the transmitter is an X transmitter and the receiver is a Y receiver. A multi-frequency focusing of the quadrature magnetic signal is performed **103** using eqn. (2) to give the direct field between the transmitter and the receiver. This may also be done using an equivalent formulation for the electric field using methods known to those versed in the art having the benefit of the present disclosure. Using the estimated direct field, the misalignment angle is estimated **105**. The estimated misalignment angle may then be used to correct the individual single frequency measurements, including the in-phase components **107**. It should be noted that while the description above has been made with respect to the XY component, from reciprocity considerations, the method is equally valid for the YX component.

Once the misalignment angle is estimated, all of the multi-component signals can be corrected for misalignment and used for interpreting formation resistivities and petrophysical parameters. The principles used for this interpretation have been discussed, for example, in US6470274 to Mollison et al, US6643589 to Zhang et al., US6636045 to Tabarovsky et al. Specifically, the parameters estimated may include horizontal and vertical resistivities (or conductivities), relative dip angles, strike angles, sand and shale content, and water saturation.

The method described above is generally not applicable when a co-located transmitter coil array is used in conjunction with a co-located main receiver coil array and a co-located bucking receiver coil array. In such a situation, the main and bucking coils are decoupled and the misalignment is estimated separately for the main and bucking coils.

A second embodiment of the invention is based on recognition of the fact that for a given anisotropic formation with a particular relative dip, the XY cross-component response will change from a negative value at -45° relative rotation to a positive value of equal magnitude at 45° relative rotation. A zero-crossing will occur at 0° relative rotation. The actual magnitude of the positive and negative values will be dependent on the resistivity and the relative dip properties of the formation, but the response should always oscillate about zero for a perfectly aligned tool rotating in a uniform anisotropic formation.

If the X transmitters and the Y receiver are misaligned, a portion of the direct XX signal will be introduced into the XY response as described previously. If the tool is rotating through a uniform formation, the deviation of the oscillations away from zero allows this misalignment to be computed.

To apply the technique, a relatively uniform formation (typically a thick shale interval) is chosen for making measurements with the 3DEX tool. The tool is rotated within the borehole. For wireline applications, this may require an auxiliary motor for rotating the tool or may result from rotation of the wireline and the downhole assembly as it is conveyed through the borehole. For measurement-while-drilling (MWD) applications, the rotation is accomplished by the rotation of the bottomhole assembly (BHA) that carries the 3DEX tool. The average XY and XX responses across this formation are computed. Based on the **eqn. (1)** and the assumption that the average $\overline{H}_{XYtrue}$ should be zero, where the overbar represents an averaging, the misalignment angle may be computed using average responses.

$$H_{XY} = H_{XXtrue} \cdot \sin \alpha \qquad\qquad (3)$$

This technique assumes that the misalignment is not changing and will not compensate for twisting and bending while logging unless the effect remains consistent. The estimation of bias in $ZX$ measurements on a rotating drillstring has been discussed in US Patent Application Ser. No. 11/299,053 (US 2006/0125479) of Chemali et al, having the same assignee as the present invention. Once the misalignment angle has been estimated, measurements may be corrected using **eqn. (1)**.

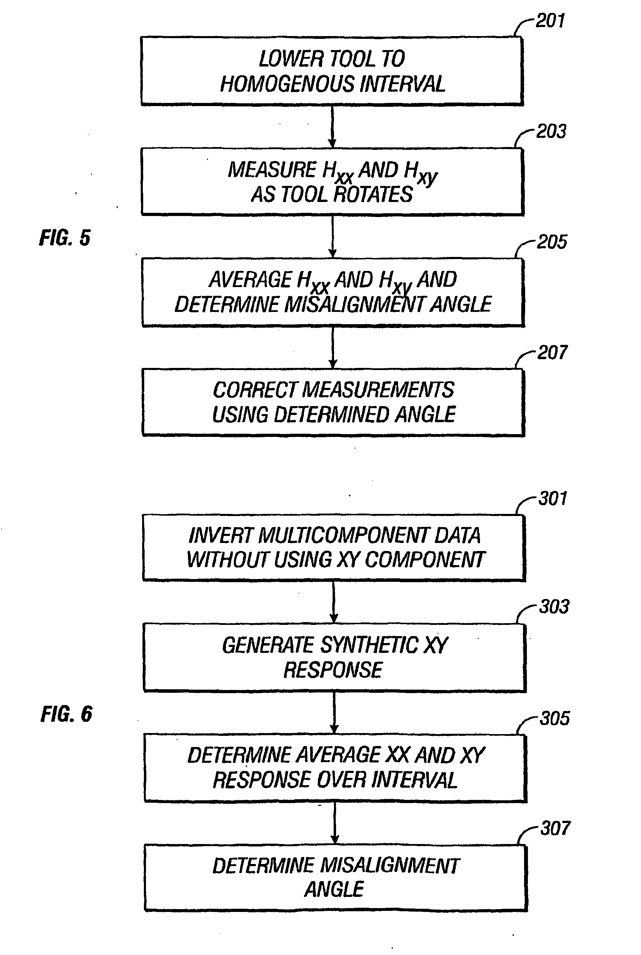

The flow chart for this method is illustrated in **Fig. 5**. The tool is lowered into a substantially homogenous interval **201**. The $H_{xx}$ and $H_{xy}$ measurements are made at a plurality of rotational angles as the tool rotates **203**. The $H_{xy}$ measurements correspond to measurements made with a first receiver antenna and the $H_{xx}$ measurements corresponds to measurements made with a second receiver antenna. The measurements are averaged and the misalignment angle estimated **205**. In one embodiment of the invention, the measurements are made at uniformly spaced angles and a simple averaging can be done. In another embodiment of the invention, the measurements may be made with non-uniform rotational angles and an appropriate averaging procedure may be used. The estimated bias provides and estimate of the misalignment angle may then be used to correct the measurements **207** made in other portions of the wellbore using eqn. (1) and a parameter of interest of the earth formation estimated.

Another embodiment of the present invention uses an inversion of 3DEX data to obtain horizontal resistivity, vertical resistivity, and formation dip and azimuth, and requires the use of multi-component measurements including the three primary components (XX,YY,ZZ) plus at least one cross-component (XY or XZ). A method for simultaneous determination of formation angles and anisotropic resistivity using multi-component induction logging data is disclosed in US6643589 to Zhang et al., having the same assignee as the present invention. The inversion is performed using a gradient technique such as a generalized Marquardt-Levenberg method. In this generalized Marquardt-Levenberg method, a data objective function is defined that is related to a difference between the model output and the measured data. The iterative procedure involves reducing a global objective function that is the sum of the data objective function and a model objective function related to changes in the model in successive iterations. In an alternate embodiment of the invention, the formation azimuth angle is excluded from the iterative process by using derived relations between the multicomponent measurements. The gradient teachnique is part of a class of techniques collectively referred to as search techniques.

When multi-array induction measurements are also available, an inversion method is described in US6885947 to Xiao et al., having the same assignee as the present invention. Data are acquired using a multi-array logging tool in a borehole having an angle of inclination to a normal to the bedding plane of earth formations. The multi-array measurements are filtered using angle dependent filters to give a filtered curve corresponding to a target one of the multi-array measurements using angle-dependent filters. Correlation coefficients are estimated for a set of possible dip angles and a relative dip angle is estimated from the correlation coefficients. This dip angle estimate together with bed boundaries obtained from the multi-array measurements are used for inverting multi-component measurements alone or jointly with multi-array measurements to refine the relative dip angle interpretation and give horizontal and vertical formation resistivity.

Yet another inversion method using a separation of modes is disclosed in US6636045 to Tabarovsky et al having the same assignee as the present invention. In *Tabarovsky,* a combination of principal component measurements is used to estimate the horizontal resistivity of the earth formations. The estimated horizontal resistivities are used in a model for inversion of other components of the data to obtain the vertical formations resistivities. *Tabarovsky* further uses multifrequency focusing when multifrequency measurements are available.

Another inversion method is described in US Patent Application Ser. No. 10/867,619 (US 2005/0274512) of Tabarovsky et al, having the same assignee as the present invention. In one embodiment of the *Tabarovsky* '619, using known values of the relative dip angle and azimuth, the focused measurements are separated into two or more fundamental modes. One of the fundamental modes is related primarily to the horizontal conductivity (or resistivity) of the earth formation, so that the horizontal conductivity may be obtained from the first mode. Using the estimated horizontal conductivity and the second mode, the vertical conductivity may be estimated. In another embodiment of the invention, the fundamental modes and the relative dip angle and azimuth are estimated simultaneously using measurements made at a plurality of depths. The simultaneous determination is done by searching over a range of relative dip angles and azimuths. Alternatively, the search may be done over a range of absolute dips and azimuths and using measurements made by orientation and navigation sensors on the tool.

One embodiment of the present invention uses an inversion technique such as that described in *Zhang* et al., *Xiao* et al., *Tabarovsky* et al., or any other suitable inversion method. A common characteristic of all of the methods is that a more stable and unique solution for formation dip and azimuth is estimated when both cross-components are included. However, if the cross-components are perfectly aligned, the same solution for formation dip and azimuth should be achieved if either the XY or the XZ components are omitted. If the XY component is in error due to misalignment, this will not be true.

The inversion technique to check for misalignment initially inverts the data with a particular cross-component such as the XY component omitted. Forward modeling is then used with these results to generate a simulated (expected) XY response. The average difference between the simulated and actual XY responses should be zero. Any difference is attributed to misalignment.

To apply the technique, the average XX and XY responses are estimated over the entire logging interval along with the average simulated XY response obtained by forward modeling from the inversion performed without the XY measurement. Based on the eqn. (1) and the assumption that the simulated XY response represents $H_{XYtrue}$, the misalignment angle may be computed using average responses.

$$\bar{\bar{H}}_{xy}^{measured} - \bar{\bar{H}}_{xy}^{simulated} = \bar{H}_{xx}\sin\alpha$$

where the overbar represents and averaging. This technique also assumes that the misalignment is not changing and will not compensate for twisting and bending while logging unless the effect remains consistent. Once the correction is estimated and applied, a new inversion of the multi-component measurements may be carried out using all the available components.

**Fig. 6** is a flow chart of this method. Multicomponent measurements (optionally with multiarray measurements) are acquired and the measurements are inverted without using the *XY* component **301**. Simulated *XY* measurements are generated for the model 305. The *XX* and *XY* measurements are averaged over the interval 305. Next, the misalignment angles is estimated **307** as discussed above.

Implicit in the control and processing of the data is the use of a computer program on a suitable machine-readable medium that enables the processor to perform the control and processing. The machine-readable medium may include ROMs, EPROMs, EAROMs, Flash Memories and Optical disks.

While the foregoing disclosure is directed to the preferred embodiments of the invention, various modifications will be apparent to those skilled in the art. It is intended that all variations within the scope of the appended claims be embraced by the foregoing disclosure.

The following definitions are helpful in understanding the scope of the invention:

*alignment*: the proper positioning or state of adjustment of parts in relation to each other;
*calibrate*: to standardize by determining the deviation from a standard so as to ascertain the proper correction factors;
*coil*: one or more turns, possibly circular or cylindrical, of a current-carrying conductor capable of producing a magnetic field;
*EAROM*: electrically alterable ROM;
*EPROM*: erasable programmable ROM;
*flash memory*: a nonvolatile memory that is rewritable;
*machin- readable medium*: something on which information may be stored in a form that can be understood by a computer or a processor;
*misalignment*: the condition of being out of line or improperly adjusted; for the cross-component, this is measured by a deviation from orthogonality;
*Optical disk*: a disc-shaped medium in which optical methods are used for storing and retrieving information;
*Position*: an act of placing or arranging; the point or area occupied by a physical object
*Quadrature*: 90° out of phase; and
*ROM*: Read-only memory.

## Claims

1. A method of establishing the utility of a resistivity logging tool for use in an earth formation, the method comprising:

(a) conveying a logging tool (9) into a borehole (1) in the earth formation;
(b) exciting a transmitter antenna (18) on the logging tool (9) at a plurality of rotational angles in a substantially homogenous interval, the transmitter antenna (18) having a first axial direction;
(c) receiving a first signal responsive to the excitation with a first receiver antenna (19) having a second axial direction different from the first axial direction at each of the plurality of rotational angles;
(d) receiving a second signal responsive to the excitation with a second receiver antenna having an axial direction substantially parallel to the first axial direction and orthogonal to the second axial direction at each of the plurality of rotational angles;
(e) using the first signals and the second signals at each of the plurality of rotational angles to estimate a misalignment angle between the transmitter antenna (18) and the first receiver antenna (19);
(f) correcting the first signal at at least one of the plurality of rotational angles; and
(g) using the corrected signal to estimate a resistivity property of the earth formation thereby establishing the utility of the logging tool (9).

2. The method of claim 1 wherein receiving the first signal at the plurality of rotation angles further comprises making measurements at a plurality of depths.

3. The method of claim 1 or 2 wherein the transmitter antenna (18) is substantially orthogonal to a longitudinal axis of the tool (9).

4. The method of any preceding claim wherein the first signal and the second signal comprise in-phase signals.

5. The method of any preceding claim wherein estimating the misalignment angle further comprises averaging the first signals and the second signals over the plurality of rotational angles.

6. The method of any preceding claim wherein the parameter of interest is at least one of: (i) a horizontal conductivity; (ii) a vertical conductivity; (iii) a horizontal resistivity; (iv) a vertical resistivity; (v) a relative dip angle; (vi) a strike angle; (vii) a sand fraction; (viii) a shale fraction; and (ix) a water saturation.

7. An apparatus for determining a parameter of interest of an earth formation, the apparatus comprising:

   (a) a logging tool (9) configured to be conveyed into a borehole (1) in the earth formation;
   (b) a transmitter antenna (18) on the logging tool (9) having a first axial direction, the transmitter antenna (18) configured to be activated at a plurality of rotational angles;
   (c) a first receiver antenna (19) having a second axial direction different from the first axial direction and configured to receive a first signal responsive to the activation of the transmitter antenna (18) at each of the plurality of rotational angles, and
   (d) a second receiver having an axial direction substantially parallel to the first axial direction and orthogonal to the second axial direction and configured to receive a second signal responsive to the activation at each of the plurality of rotational angles; and
   (e) a processor configured to estimate from the first and second signals at each of the plurality of rotational angles a misalignment angle between the transmitter antenna (18) and the first receiver antenna (19).

8. The apparatus of claim 7 wherein the first and second signals comprise in-phase signals.

9. The apparatus of claim 7 or 8 wherein the processor is configured to estimate the misalignment angle at least in part by averaging the first signals and the second signals over the plurality of rotational angles.

10. The apparatus of any of claims 7 to 9 wherein the processor is further configured to:

    (i) correct the first signal at at least one of the plurality of rotational angles; and
    (ii) use the corrected first signal to estimate a parameter of interest of the earth formation.

11. The apparatus of claim 10 wherein the parameter of interest is at least one of: (i) a horizontal conductivity; (ii) a vertical conductivity; (iii) a horizontal resistivity; (iv) a vertical resistivity; (v) a relative dip angle; (vi) a strike angle; (vii) a sand fraction; (viii) a shale fraction; and (ix) a water saturation.

12. The apparatus of any preceding claim further comprising a wireline (11) which is configured to convey the logging tool into the borehole.

13. The apparatus of any one of claims 7 to 11 wherein the logging tool (9) is part of a bottomhole assembly (BHA) configured to be conveyed into the borehole (1) on a drilling tubular.

14. The apparatus of any preceding claim further comprising a motor configured to rotate the logging tool (9) to the plurality of rotational angles.

15. The apparatus of any preceding claim further comprising an orientation device configured to sense the rotational angle of the tool (9).

16. A computer-readable-medium used with an apparatus for evaluating an earth formation, the apparatus comprising:

    (a) a logging tool (9) configured to be conveyed in a borehole (1) in the formation;

(b) a transmitter antenna (18) on the logging tool (9) having a first axial direction, the transmitter antenna (18) configured to be activated at a plurality of rotational angles of the tool; and

(c) a first receiver antenna (19) having a second axial direction different from the first axial direction and configured to receive a first signal resulting from the activation of the transmitter antenna (18) at each of the plurality of rotational angles;

(d) a second receiver antenna having a third axial direction substantially parallel to the first axial direction and orthogonal to the second axial direction and configured to receive second signal resulting from the activation of the transmitter antenna (18) at each of the plurality of rotational angles;

the medium comprising instructions which enable a processor to

(e) estimate from the first signal and the second signal at each of the plurality of rotational angles a misalignment angle between the transmitter antenna (18) and the first receiver antenna (19);

(f) correct the first signal at at least one of the plurality of rotational angles;

(g) use the corrected signal to estimate a parameter of interest of the earth formation.

**Patentansprüche**

1. Verfahren zum Etablieren der Nützlichkeit einer Sonde zur Messung des spezifischen Widerstands zur Verwendung in einer Erdformation, umfassend:

(a) Befördern einer Sonde (9) in ein Bohrloch (1) in der Erdformation;

(b) Erregen einer Senderantenne (18) an der Sonde (9) bei mehreren Drehwinkeln in einem im Wesentlichen homogenen Intervall, wobei die Senderantenne (18) eine erste Achsenrichtung hat;

(c) Empfangen eines ersten Signals als Reaktion auf die Erregung mit einer ersten Empfängerantenne (19) mit einer zweiten Achsenrichtung, die sich von der ersten Achsenrichtung unterscheidet, bei jedem der mehreren Drehwinkel;

(d) Empfangen eines zweiten Signals als Reaktion auf die Erregung mit einer zweiten Empfängerantenne mit einer Achsenrichtung, die im Wesentlichen parallel zu der ersten Achsenrichtung und orthogonal zu der zweiten Achsenrichtung ist, bei jedem der mehreren Drehwinkel;

(e) Verwenden der ersten Signale und der zweiten Signale bei jedem der mehreren Drehwinkel zum Schätzen eines Fehlausrichtungswinkels zwischen der Senderantenne (18) und der ersten Empfängerantenne (19);

(f) Korrigieren des ersten Signals an mindestens einem der mehreren Drehwinkel; und

(g) Verwenden des korrigierten Signals zum Schätzen einer spezifischen Widerstandseigenschaft der Erdformation, wodurch die Nützlichkeit der Sonde (9) etabliert wird.

2. Verfahren nach Anspruch 1, wobei das Empfangen des ersten Signals an den mehreren Drehwinkeln des Weiteren das Vornehmen von Messungen bei mehreren Tiefen umfasst.

3. Verfahren nach Anspruch 1 oder 2, wobei die Senderantenne (18) im Wesentlichen orthogonal zu einer Längsachse der Sonde (9) liegt.

4. Verfahren nach einem vorangehenden Anspruch, wobei das erste Signal und das zweite Signal phasengleiche Signale umfassen.

5. Verfahren nach einem vorangehenden Anspruch, wobei das Schätzen des Fehlausrichtungswinkels des Weiteren die Durchschnittsbildung der ersten Signale und der zweiten Signale über die mehreren Drehwinkel umfasst.

6. Verfahren nach einem vorangehenden Anspruch, wobei der Parameter von Interesse mindestens einer der folgenden ist: (i) eine horizontale Leitfähigkeit; (ii) eine vertikale Leitfähigkeit; (iii) ein horizontaler spezifischer Widerstand; (iv) ein vertikaler spezifischer Widerstand; (v) ein relativer Neigungswinkel; (vi) ein Orientierungswinkel; (vii) eine Sandfraktion; (viii) eine Schieferfraktion; und (ix) eine Wassersättigung.

7. Vorrichtung zum Bestimmen eines Parameters von Interesse einer Erdformation, wobei die Vorrichtung umfasst:

(a) eine Sonde (9), die zum Befördern in ein Bohrloch (1) in der Erdformation gestaltet ist;

(b) eine Senderantenne (18) an der Sonde (9) mit einer ersten Achsenrichtung, wobei die Senderantenne (18) dazu gestaltet ist, bei mehreren Drehwinkeln aktiviert zu werden;

(c) eine erste Empfängerantenne (19) mit einer zweiten Achsenrichtung, die sich von der ersten Achsenrichtung unterscheidet, die dazu gestaltet ist, ein erstes Signal als Reaktion auf die Aktivierung der Senderantenne (18) bei jedem der mehreren Drehwinkel zu empfangen;

(d) eine zweite Empfängerantenne mit einer Achsenrichtung, die im Wesentlichen parallel zu der ersten Achsenrichtung und orthogonal zu der zweiten Achsenrichtung ist, die dazu gestaltet ist, ein zweites Signal als Reaktion auf die Aktivierung bei jedem der mehreren Drehwinkel zu empfangen;

(e) einen Prozessor, der zum Schätzen eines Fehlausrichtungswinkels zwischen der Senderantenne (18) und der ersten Empfängerantenne (19) aus den ersten und zweiten Signalen bei jedem der mehreren Drehwinkel gestaltet ist.

8.  Vorrichtung nach Anspruch 7, wobei die ersten und zweiten Signale phasengleiche Signale umfassen.

9.  Vorrichtung nach Anspruch 7 oder 8, wobei der Prozessor zum Schätzen des Fehlausrichtungswinkels zumindest teilweise durch Durchschnittsbildung der ersten Signale und der zweiten Signale über die mehreren Drehwinkel gestaltet ist.

10. Vorrichtung nach einem der Ansprüche 7 bis 9, wobei der Prozessor des Weiteren gestaltet ist zum:

(i) Korrigieren des ersten Signals bei mindestens einem der mehreren Drehwinkel; und
(ii) Verwenden des korrigierten ersten Signals zum Schätzen eines Parameters von Interesse der Erdformation.

11. Vorrichtung nach Anspruch 10, wobei der Parameter von Interesse mindestens einer der folgenden ist: (i) eine horizontale Leitfähigkeit; (ii) eine vertikale Leitfähigkeit; (iii) ein horizontaler spezifischer Widerstand; (iv) ein vertikaler spezifischer Widerstand; (v) ein relativer Neigungswinkel; (vi) ein Orientierungswinkel; (vii) eine Sandfraktion; (viii) eine Schieferfraktion; und (ix) eine Wassersättigung.

12. Vorrichtung nach einem vorangehenden Anspruch, des Weiteren umfassend eine Drahtleitung (11), die zum Befördern der Sonde in das Bohrloch gestaltet ist.

13. Vorrichtung nach einem der Ansprüche 7 bis 11, wobei die Sonde (9) Teil einer Bohrgarnitur (Bottom Hole Assembly - BHA) ist, die dazu gestaltet ist, auf einem Bohrrohr in das Bohrloch (1) befördert zu werden.

14. Vorrichtung nach einem vorangehenden Anspruch, des Weiteren umfassend einen Motor, der zum Drehen der Sonde (9) in die mehrere Drehwinkel gestaltet ist.

15. Vorrichtung nach einem vorangehenden Anspruch, des Weiteren umfassend eine Orientierungsrichtung, die zum Erfassen des Drehwinkels der Sonde (9) gestaltet ist.

16. Computerlesbares Medium, das mit einer Vorrichtung zur Auswertung einer Erdformation verwendet wird, wobei die Vorrichtung umfasst:

(a) eine Sonde (9), die zum Befördern in ein Bohrloch (1) in der Erdformation gestaltet ist;
(b) eine Senderantenne (18) an der Sonde (9) mit einer ersten Achsenrichtung, wobei die Senderantenne (18) dazu gestaltet ist, bei mehreren Drehwinkeln aktiviert zu werden;
(c) eine erste Empfängerantenne (19) mit einer zweiten Achsenrichtung, die sich von der ersten Achsenrichtung unterscheidet, und die dazu gestaltet ist, ein erstes Signal, das sich aus der Aktivierung der Senderantenne (18) ergibt, bei jedem der mehreren Drehwinkel zu empfangen;
(d) eine zweite Empfängerantenne mit einer dritten Achsenrichtung, die im Wesentlichen parallel zu der ersten Achsenrichtung und orthogonal zu der zweiten Achsenrichtung ist, und die dazu gestaltet ist, ein zweites Signal, das sich aus der Aktivierung der Senderantenne (18) ergibt, bei jedem der mehreren Drehwinkel zu empfangen;
wobei das Medium Anweisungen enthält, die einem Prozessor ermöglichen,
(e) aus den ersten und zweiten Signalen bei jedem der mehreren Drehwinkel einen Fehlausrichtungswinkel zwischen der Senderantenne (18) und der ersten Empfängerantenne (19) zu schätzen;
(f) das erste Signal bei mindestens einem der mehrere Drehwinkel zu korrigieren;
(g) das korrigierte Signal zum Schätzen eines Parameters von Interesse der Erdformation zu verwenden.

**Revendications**

1.  Procédé d'établissement de l'utilité d'un outil d'enregistrement de résistivité pour usage dans une formation terrestre, le procédé comprenant les étapes consistant à :

    (a) acheminer un outil d'enregistrement (9) dans un trou de forage (1) de la formation terrestre ;
    (b) exciter une antenne émettrice (18) sur l'outil d'enregistrement (9) sous une pluralité d'angles de rotation dans un intervalle sensiblement homogène, l'antenne émettrice (18) ayant une première direction axiale ;
    (c) recevoir un premier signal sensible à l'excitation avec une première antenne réceptrice (19) ayant une seconde direction axiale différente de la première direction axiale sous chacun de la pluralité d'angles de rotation ;
    (d) recevoir un second signal sensible à l'excitation avec une seconde antenne réceptrice ayant une direction axiale sensiblement parallèle à la première direction axiale et orthogonale à la seconde direction axiale sous chacun de la pluralité d'angles de rotation ;
    (e) utiliser les premiers signaux et les seconds signaux sous chacun de la pluralité d'angles de rotation pour estimer un angle de désalignement entre l'antenne émettrice (18) et la première antenne réceptrice (19) ;
    (f) corriger le premier signal sous au moins l'un de la pluralité d'angles de rotation ; et
    (g) utiliser le signal corrigé pour estimer une propriété de résistivité de la formation terrestre, établissant de la sorte l'utilité de l'outil d'enregistrement (9).

2.  Procédé selon la revendication 1, dans lequel le premier signal sous la pluralité d'angles de rotation comprend en outre la réalisation de mesures dans une pluralité de profondeurs.

3.  Procédé selon la revendication 1 ou la revendication 2, dans lequel l'antenne émettrice (18) est sensiblement orthogonale à un axe longitudinal de l'outil (9).

4.  Procédé selon l'une quelconque des revendications précédentes, dans lequel le premier signal et le second signal comprennent des signaux en phase.

5.  Procédé selon l'une quelconque des revendications précédentes, dans lequel l'estimation de l'angle de désalignement comprend en outre le calcul de la moyenne des premiers signaux et des seconds signaux sur la pluralité d'angles de rotation.

6.  Procédé selon l'une quelconque des revendications précédentes, dans lequel le paramètre intéressant est au moins l'un des suivants : (i) une conductivité horizontale ; (ii) une conductivité verticale ; (iii) une résistivité horizontale ; (iv) une résistivité verticale ; (v) un angle de pente relative ; (vi) un angle d'orientation ; (vii) une fraction de sable ; (viii) une fraction de schiste ; et (ix) une saturation d'eau.

7.  Appareil de détermination d'un paramètre intéressant dans une formation terrestre, l'appareil comprenant :

    (a) un outil d'enregistrement (9) configuré pour être acheminé dans un trou de forage (1) de la formation terrestre ;
    (b) une antenne émettrice (18) sur l'outil d'enregistrement (9) ayant une première direction axiale, l'antenne émettrice (18) étant configurée pour être activée sous une pluralité d'angles de rotation ;
    (c) une première antenne réceptrice (19) ayant une seconde direction axiale différente de la première direction axiale et configurée pour recevoir un premier signal sensible à l'activation de l'antenne émettrice (18) sous chacun de la pluralité d'angles de rotation, et
    (d) un second récepteur ayant une direction axiale sensiblement parallèle à la première direction axiale et orthogonale à la seconde direction axiale, configuré pour recevoir un second signal sensible à l'activation sous chacun de la pluralité d'angles de rotation ; et
    (e) un processeur configuré pour estimer à partir des premiers et seconds signaux sous chacun de la pluralité d'angles de rotation un angle de désalignement entre l'antenne émettrice (18) et la première antenne réceptrice (19).

8.  Appareil selon la revendication 7, dans lequel les premiers et seconds signaux comprennent des signaux en phase.

9.  Appareil selon la revendication 7 ou la revendication 8, dans lequel le processeur est configuré pour estimer l'angle de désalignement au moins en partie en calculant la moyenne des premiers et des seconds signaux sur la pluralité d'angles de rotation.

**10.** Appareil selon l'une quelconque des revendications 7 à 9, dans lequel le processeur est encore configuré pour :

(i) corriger le premier signal sous au moins l'un de la pluralité d'angles de rotation ; et
(ii) utiliser le premier signal corrigé pour estimer un paramètre intéressant dans la formation terrestre.

**11.** Appareil selon la revendication 10, dans lequel le paramètre intéressant est au moins l'un des suivants : (i) une conductivité horizontale ; (ii) une conductivité verticale ; (iii) une résistivité horizontale ; (iv) une résistivité verticale ; (v) un angle de pente relative ; (vi) un angle d'orientation ; (vii) une fraction de sable ; (viii) une fraction de schiste ; et (ix) une saturation d'eau.

**12.** Appareil selon l'une quelconque des revendications précédentes, comprenant en outre un câble (11) qui est configuré pour acheminer l'outil d'enregistrement dans le trou de forage.

**13.** Appareil selon l'une quelconque des revendications 7 à 11, dans lequel l'outil d'enregistrement (9) fait partie d'un ensemble de trou de fond (BHA) configuré pour être acheminé dans le trou de forage (1) sur un train de tubes de forage.

**14.** Appareil selon l'une quelconque des revendications précédentes, comprenant en outre un moteur configuré pour faire tourner l'outil d'enregistrement (9) selon la pluralité d'angles de rotation.

**15.** Appareil selon l'une quelconque des revendications précédentes, comprenant en outre un dispositif d'orientation configuré pour capter l'angle de rotation de l'outil (9).

**16.** Support lisible sur ordinateur utilisé avec un appareil pour évaluer une formation terrestre, l'appareil comprenant :

(a) un outil d'enregistrement (9) configuré pour être acheminé dans un trou de forage (1) de la formation terrestre ;
(b) une antenne émettrice (18) sur l'outil d'enregistrement (9) ayant une première direction axiale, l'antenne émettrice (18) étant configurée pour être activée sous une pluralité d'angles de rotation de l'outil ;
(c) une première antenne réceptrice (19) ayant une seconde direction axiale différente de la première direction axiale et configurée pour recevoir un premier signal résultant de l'activation de l'antenne émettrice (18) sous chacun de la pluralité d'angles de rotation, et
(d) une seconde antenne réceptrice ayant une troisième direction axiale sensiblement parallèle à la première direction axiale et orthogonale à la seconde direction axiale, configurée pour recevoir un second signal résultant de l'activation de l'antenne émettrice (18) sous chacun de la pluralité d'angles de rotation ;
le support comprenant des instructions qui permettent à un processeur :
(e) d'estimer à partir du premier signal et du second signal sous chacun de la pluralité d'angles de rotation un angle de désalignement entre l'antenne émettrice (18) et la première antenne réceptrice (19) ;
(f) de corriger le premier signal sous au moins l'un de la pluralité d'angles de rotation ; et
(g) utiliser le signal corrigé pour estimer un paramètre intéressant dans la formation terrestre.

**FIG. 1**

## TILT PRINCIPLE OF OPERATION

### CONVENTIONAL MODE
(EXISTING TOOL)

### ADDITIONAL MODE
(NEW TOOL)

SHALE: LOW $R_t$

SAND: HIGH $R_t$

**FIG. 2A**
(Prior Art)

**FIG. 2B**
(Prior Art)

EP 2 031 420 B1

Anisotropy
Axis

$\theta$

$R_v$

$R_h$

$Z$

**FIG. 3**

**FIG. 4**

┌─────────────────────────────────────┐ ╭─101
│ ACQUIRE DATA AT A                    │
│ PLURALITY OF FREQUENCIES             │
└─────────────────────────────────────┘
              ↓
┌─────────────────────────────────────┐ ╭─103
│ PERFORM MULTI-FREQUENCY FOCUSING     │
│ AND ESTIMATE DIRECT FIELD FROM       │
│ QUADRATURE MEASUREMENTS              │
└─────────────────────────────────────┘
              ↓
┌─────────────────────────────────────┐ ╭─105
│ ESTIMATE MISALIGNMENT                │
│ ANGLE                                │
└─────────────────────────────────────┘
              ↓
┌─────────────────────────────────────┐ ╭─107
│ CORRECT MEASUREMENTS                 │
│ USING DETERMINED ANGLE               │
└─────────────────────────────────────┘

~201

LOWER TOOL TO
HOMOGENOUS INTERVAL

~203

MEASURE $H_{xx}$ AND $H_{xy}$
AS TOOL ROTATES

**FIG. 5**

~205

AVERAGE $H_{xx}$ AND $H_{xy}$ AND
DETERMINE MISALIGNMENT ANGLE

~207

CORRECT MEASUREMENTS
USING DETERMINED ANGLE

~301

INVERT MULTICOMPONENT DATA
WITHOUT USING XY COMPONENT

~303

GENERATE SYNTHETIC XY
RESPONSE

**FIG. 6**

~305

DETERMINE AVERAGE XX AND XY
RESPONSE OVER INTERVAL

~307

DETERMINE MISALIGNMENT
ANGLE

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4837517 A, Barber
- US 5157605 A, Chandler
- US 5600246 A, Fanini
- US 4302722 A, Gianzero
- WO 9800733 A, Beard
- US 5452761 A, Beard
- US 5999883 A, Gupta
- US 5781436 A, Forgang
- US 5884227 A, Rabinovich

- US 6470274 B, Mollison
- US 6643589 B, Zhang
- US 6636045 B, Tabarovsky
- US 299053 A
- US 20060125479 A, Chemali
- US 6885947 B, Xiao
- US 867619 A
- US 20050274512 A, Tabarovsky

**Non-patent literature cited in the description**

- Basic Theory of Induction Logging and Application to Study of Two-Coil Sondes. **J. H. MORAN ; K. S. KUNZ.** Geophysics. Society of Exploration Geophysicists, December 1962, vol. 27, 829-858